# EUROPÄISCHE PATENTSCHRIFT

(11) **EP 1 238 877 B1**
(45) Veröffentlichungstag und Bekanntmachung des Hinweises auf die Patenterteilung: **03.12.2003**
(21) Anmeldenummer: 02004218.0
(22) Anmeldetag: 26.02.2002
(51) Int. Cl.: B60T 8/00, G01P 21/02

(54) **Fahrzeugbremsanlage mit einer Elektronik zur Bestimmung einer Fahrzeugreferenzgeschwindigkeit**
Vehicle brake device provided with electronics for determining a vehicle referencespeed
Dispositif de freinage de véhicule équipé d'électronique pour déterminer une vitesse de référence

(30) Priorität: 05.03.2001 DE 10110548
(43) Veröffentlichungstag der Anmeldung: 11.09.2002
(73) Patentinhaber: KNORR-BREMSE Systeme für Schienenfahrzeuge GmbH, 80809 München (DE)
(72) Erfinder: Eberle, Wolfgang, 85748 Garching (DE); Mayer, Reinhold, 85757 Karlsfeld (DE)

(56) Entgegenhaltungen:
- DE-A- 3 441 103
- DE-A- 3 738 914
- DE-A- 3 925 829
- DE-A- 4 444 408
- DE-A- 19 930 561
- DE-A- 19 953 865
- US-A- 5 476 311

## Beschreibung

Die vorliegende Erfindung betrifft eine Fahrzeugbremsanlage gemäß dem Oberbegriff des Patentanspruches 1, siehe z.B. Dokument DE-A-19 930 561. Dokument DE-A-3 441 103 gebt an, daß zwei Raddrehzahlsensoren angebracht werden können, zur Erfassung einer defekten Impulsgeben einer Asynchronmaschine.

Moderne Straßen- und Schienenfahrzeuge sind üblicherweise mit einer Blockierschutzeinrichtung ausgestattet, die bei Straßenfahrzeugen als "ABS-System" und bei Schienenfahrzeugen als "Gleitschutzsystem" bezeichnet wird. ABS-Systeme und Gleitschutzsysteme sollen die Bremsdrücke an einzelnen Rädern bzw. Achsen des Fahrzeuges so regeln, daß ein Blockieren der Räder bzw. Radsätze verhindert und der Bremsweg minimiert wird. Für eine derartige Bremsdruckregelung benötigt man die an den ' einzelnen Rädern bzw. Achsen vorhandenen Schlupfwerte, die aus den jeweiligen Radgeschwindigkeiten und der tatsächlichen Fahrzeuggeschwindigkeit ermittelt werden. Hierzu sind üblicherweise Raddrehzahlsensoren vorgesehen, wobei aus den einzelnen Raddrehzahlen ein Näherungswert für die tatsächliche Fahrzeuggeschwindigkeit berechnet wird, die im folgenden als "Referenzgeschwindigkeit" bezeichnet wird.

Insbesondere bei schlechten Haftwerten zwischen Rad und Fahrbahn beeinflußt die Referenzgeschwindigkeit maßgeblich die Bremskraftregelung an den Rädern. Eine "falsche" Referenzgeschwindigkeit kann also zu Fehlern in der Bremskraftregelung des gesamten Fahrzeuges führen. Für eine gute ABS- bzw. Gleitschutzregelung ist daher eine möglichst exakte Bestimmung der tatsächlichen Fahrzeuggeschwindigkeit, d.h. der Referenzgeschwindigkeit erforderlich. Insbesondere bei Fahrzeugen, die lediglich über ein einziges unabhängiges System zur Bremskraftregelung bei reduziertem Haftwert zwischen Rad und Schiene, sollte daher eine hohe Sicherheit gegenüber Einzelfehlern sichergestellt sein.

Aus der DE 39 31 313 A1 ist ein Antiblockiersystem für ein Motorrad bekannt, bei dem dem Vorderrad und dem Hinterrad jeweils ein Drehzahlsensor zugeordnet ist. Zur Bestimmung der Radschlüpfe werden hier für das Vorderrad und das Hinterrad jeweils eine der tatsächlichen Fahrzeuggeschwindigkeit angenäherte Referenzgeschwindigkeit ermittelt.

Üblicherweise sind ABS- bzw. Gleitschutzsysteme einkanalig aufgebaut, d.h. die Raddrehzahl wird pro Rad bzw. pro Radgruppe durch einen einzigen Raddrehzahlsensor erfaßt. Wenn ein Impulsgeber, d.h. ein Raddrehzahlsensor ausfällt, ist das bzw. sind die zugeordneten Räder "ungeschützt", d.h. sie können nicht mehr entsprechend der Raddrehzahl geregelt werden.

Wenn von einem defekten Raddrehzahlsensor eine "falsche" Radgeschwindigkeit geliefert wird und in die Referenzgeschwindigkeit eingeht, besteht die Gefahr, daß an allen Achsen irrtümlich der Bremsdruck verringert wird bzw. daß an allen Achsen die Traktion fehlerhaft bzw. abgeregelt wird.

Damit fehlerhafte Raddrehzahlsignale den Referenzgeschwindigkeitswert möglichst nicht verfälschen, weisen aus anmelderinternem Stand der Technik bekannte Algorithmen zur Berrechnung der Referengeschwindigkeit zwar eine "Erkennung" fehlerhafter Signale auf. Eine sichere Erkennung aller möglichen Fehler ist jedoch sehr aufwendig. Außerdem können sich Fehler bereits während der "Fehleroffenbarungszeit" so auf die Berechnung der Referenzgeschwindigkeit auswirken, daß die Bremskraftregelung nachteilig beeinflußt wird.

Aufgabe der Erfindung ist es, eine Bremsanlage zu schaffen, die hinsichtlich der Ermittlung der tatsächlichen Fahrzeuggeschwindigkeit optimiert ist und auch bei Ausfall eines Sensors kein Rad ungeschützt läßt.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Das Grundprinzip der Erfindung besteht bei einer Bremsanlage mit einer Bremselektronik und daran angeschlossenen Raddrehzahlsensoren darin, daß jedem zu überwachenden Rad bzw. jeder zu überwachenden Radgruppe mindestens zwei Radsensoren zugeordnet sind. Während des Betriebs werden sämtliche im Fahrzeug vorhandenen Radsensoren ständig überwacht. Die der tatsächlichen Fahrzeuggeschwindigkeit angenäherte Referenzgeschwindigkeit wird jedoch zu jedem Zeitpunkt stets nur an einem der von den Radsensoren aufgenommenen Raddrehzahlsignale "orientiert". Welcher der vorhandenen Raddrehzahlsensoren für die Referenzgeschwindigkeit momentan als maßgeblich anzusehen ist, wird gemäß der Erfindung in Abhängigkeit vom aktuellen Fahrzustand und mindestens einem vorgegebenen Geschwindigkeitskriterium ermittelt. Die Erfindung schafft somit eine ABS- bzw. Gleitschutzanlage mit Fehlertoleranz gegen Ausfall eines Geschwindigkeitssensors.

Vereinfacht ausgedrückt wird überprüft, ob das Fahrzeug gerade gebremst bzw. beschleunigt wird oder antriebslos dahinrollt. In Abhängigkeit vom vorliegenden Fahrzustand wird eine der "höheren" gemessenen oder der "niedrigeren" gemessenen Radgeschwindigkeiten der Referenzgeschwindigkeitsermittlung zugrunde gelegt, was noch genauer erläutert wird.

Nach einer Weiterbildung der Erfindung wird die Referenzgeschwindigkeit bei gebremstem Fahrzeug an der zweithöchsten Radgeschwindigkeit orientiert. Alternativ dazu kann auch vorgesehen sein, daß bei gebremstem Fahrzeug zunächst aus jedem "Drehzahlpaar" der einander zugeordneten Raddrehzahlsensoren die Minimumgeschwindigkeit ermittelt wird. Die Referenzgeschwindigkeit wird dann an dem momentanen Maximum dieser Minimumgeschwindigkeiten orientiert.

Bei nichtgebremstem Fahrzeug, insbesondere bei angetriebenem Fahrzeug (Traktion) kann die Referenzgeschwindigkeit an der zweitniedrigsten Radgeschwindigkeit orientiert werden. Alternativ dazu kann vorgesehen sein, daß bei nichtgebremstem Fahrzeug zunächst aus jedem Drehzahlpaar die Maximumgeschwindigkeit ermittelt wird und daß die Referenzgeschwindigkeit dann am Minimum dieser Maximumgeschwindigkeiten orientiert wird.

Beim Bremsen ist somit gewährleistet, daß ein störungsbedingt zu hohes Geschwindigkeitssignal die Referenzgeschwindigkeit nicht beeinflußt. Dementsprechend wird bei nichtgebremstem Fahrzeug bzw. im Zustand "Traktion" ein störungsbedingt zu niedriges Radgeschwindigkeitssignal "ausgeblendet".

Die Erfassung der Raddrehzahlsignale kann entweder durch ein einziges Steuergerät erfolgen oder alternativ dazu auf mehrere Steuergeräte aufgeteilt sein, wenn z.B. die Anzahl der verfügbaren Eingänge eines Steuergeräts nicht ausreicht. Bei einer Aufteilung auf mehrere Steuergeräte werden die Radgeschwindigkeitssignale zwischen den Steuergeräten wechselseitig über einen Datenbus ausgetauscht.

Da gemäß der Erfindung einem Rad bzw. einer Radgruppe zwei Raddrehzahlsensoren zugeordnet sind, muß auch festgelegt sein, welcher der beiden Raddrehzahlsensoren für die Bremskraftregelung, d.h. die ABS- bzw. Gleitschutzregelung und die ASR-Regelung an dem jeweiligen Rad bzw. der jeweiligen Radgruppe maßgebend sein soll. Betrachtet man zunächst die ABS- bzw. Gleitschutzregelung, so kann folgendes vorgesehen sein:
a) der ABS- bzw. Gleitschutzregelung wird die höhere der von den einander zugeordneten Radsensoren gelieferten Radgeschwindigkeiten zugrunde gelegt, und zwar dann, wenn in einem Fahrzustand die "Absicherung gegen irrtümliches Lösen der Bremse" höchste Priorität hat, z.B. bei alleinfahrendem Fahrzeug; oder
b) der ABS- bzw. Gleitschutzregelung wird die niedrigere der beiden Radgeschwindigkeiten zugrunde gelegt, wenn "der Blockierschutz" höchste Priorität hat, z.B. bei einem Zug, der aus mehreren Wagen besteht.

Hinsichtlich der Antriebskraftregelung (ASR- bzw. Schleuderschutzregelung) eines Rades kann folgendes vorgesehen sein:
a) der ASR-Regelung wird die niedrigere der beiden Radgeschwindigkeiten zugrunde gelegt, wenn die "Absicherung gegen einen irrtümlichen Abbau der Traktionskraft" höchste Priorität hat; oder
b) der ASR-Regelung wird die höhere der beiden Radgeschwindigkeiten zugrunde gelegt, wenn das Durchdrehen eines Rades mit höchster Priorität verhindert werden soll.

Nach einer Weiterbildung der Erfindung ist vorgesehen, daß sämtliche Raddrehzahlsignale durch eine Überwachungselektronik einer Plausibilitätskontrolle unterzogen werden. Wenn für ein Raddrehzahlsignal ein Fehler erkannt wird bzw. wenn ein Raddrehzahlsignal als unplausibel angesehen wird, was z.B. durch einen Sensorausfall bzw. durch Sensorsignalspitzen infolge externer elektromagnetischer Störfelder bedingt sein kann, dann wird nach einer entsprechenden "Fehleroffenbarungszeit" (Zeitdauer bis der Fehler erkannt wird) dieses Raddrehzahlsignal nicht mehr in die Ermittlung der Referenzgeschwindigkeit und auch nicht mehr in die Regelung der Brems- bzw. Antriebskraft des zugeordneten Rades bzw. der Radgruppe einbezogen. In einem derartigen Fall wird dann nur noch der zweite "Kanal", d.h. der zugeordnete andere Raddrehzahlsensor ausgewertet.

Die Erfindung geht also von dem Ansatz aus, daß nicht die Elektronik, sondern die "Peripherie", d.h. insbesondere die Sensorik die Hauptfehlerquelle darstellt. Sensoren fallen nämlich erheblich häufiger aus als die Bremselektronik selbst. Im Unterschied zu der o.g. DE 39 31 313 A1 verläßt die Erfindung den "Gedanken der 2-Kanaligkeit der Referenzgeschwindigkeit", wonach für einzelne Räder bzw. Radgruppen jeweils eine "eigene" Referenzgeschwindigkeit bestimmt wird.

Gemäß der Erfindung ist vielmehr eine "doppelte", d.h. echt redundante Raddrehzahlerfassung vorgesehen. Ein Einzelfehler eines Sensors wirkt sich somit nicht auf die gesamte Bremsregelung des Fahrzeuges aus, weil außer der fehlerhaften noch eine intakte Geschwindigkeitsinformation des "betroffenen" Rades bzw. der betroffenen Radgruppe vorhanden ist.

Ein Kernpunkt der Erfindung ist dabei die oben beschriebene "Auswahllogik". Die Auswahllogik ermöglicht eine schnelle und einfache Entscheidung, welcher von zwei einander zugeordneten Sensoren aus Sicherheits- oder aus Verfügbarkeitsgesichtspunkten das "genauere bzw. realistischere" Signal liefert. Somit kann sehr schnell, d.h. während einer Fehlererkennungszeit schon derjenige Sensor eines Sensorpaares "ausgesondert" werden, dessen Einbeziehung sich ungünstig auf das Regelziel auswirkt, beispielsweise dessen Einbeziehung in die Referenzgeschwindigkeitsbildung sich nachteilig auf die Fahrsicherheit auswirken würde. Ein einzelner Sensor kann die Referenzgeschwindigkeitsermittlung also nicht so beeinflussen, daß alle bzw. ein Teil der Fahrzeugbremsen irrtümlich "entbremst" werden.

Insbesondere ist die individuelle Bremsdruckregelung des von einem Einzelfehler eines Sensors betroffenen Rades in der Regel uneingeschränkt möglich. Wenn der gestörte Sensor ermittelt werden kann, so wird nach Ablauf der Fehler-erkennungszeit automatisch auf den intakten Sensor zugegrif-fen, welcher der Logik für dieses Rad hier immer zur Verfügung steht, so daß keinerlei Einbußen hinsichtlich der Regelbarkeit hingenommen werden müssen. Vor Ablauf der Fehlererkennungszeit bzw. bei Fehlern, bei denen nicht entschieden werden kann, welcher der beiden differierenden Sensoren gestört ist, wird entsprechend der oben erläuterten Kriterien entweder eine Entscheidung zugunsten der Fahrsicherheit oder zugunsten der Verfügbarkeit getroffen. Bei einer Entscheidung zugunsten der Fahrsicherheit wird der Sensor als "gültig" angesehen, der den geringeren Radschlupf, d.h. die geringere Einbremsung anzeigt. Bei einer Entscheidung zugunsten der Verfügbarkeit wird der Sensor als "gültig" angesehen, der den größeren Radschlupf anzeigt, d.h. der eine größere Einbremsung des Rades bzw. der Radgruppe anzeigt.

Gegenüber herkömmlichen Bremssystemen, bei denen jeweils nur ein Raddrehzahlsensor zur Bestimmung der Radgeschwindigkeiten vorgesehen ist, basiert die Referenzgeschwindigkeitsermittlung gemäß der Erfindung auf einer größeren Anzahl von Sensorsignalen, was die Fehlersicherheit bzw. die Erkennbarkeit von Fehlern verbessert.

Die Vorteile der Erfindung lassen sich wie folgt zusammenfassen:
1. Ein Einzelfehler bei der Radgeschwindigkeitserfassung beeinflußt die Referenzgeschwindigkeitsbildung niemals so, daß die Bremskraft bzw. ein Teil der Bremskraft des Fahrzeuges bzw. die Antriebskraft des Fahrzeuges vollständig abgebaut wird. Dies gilt auch dann, wenn nur ein Steuergerät verwendet wird.
2. Die Möglichkeiten zur Erkennung unplausibler Raddrehzahlsignale sind wesentlich verbessert, da die Anzahl der erfaßten Raddrehzahlen groß ist und die Geschwindigkeiten zentral miteinander verglichen werden können.
3. Durch die redundante Raddrehzahlerfassung können immer zwei Drehzahlsignale eines Rades in die Regelung einbezogen werden. Das Rad bleibt also auch dann geschützt, wenn eines der beiden Drehzahlsignale ausfällt.
4. Die "2-Kanaligkeit" ist durch Verwendung nur eines Steuerrechners kostengünstig realisierbar. Gegenüber einem einkanaligen System sind lediglich Doppelimpulsgeber bzw. zwei einzelne Raddrehzahlgeber erforderlich. Die Verwendung von zwei Steuergeräten ist nicht zwingend erforderlich.

Im folgenden wird die Erfindung anhand eines Ausführungsbeispieles im Zusammenhang mit der Zeichnung näher erläutert. Es zeigen:
- Fig. 1: das Prinzip der Erfindung in schematischer Darstellung;
- Fig. 2: den Aufbau der Bremselektronik in vereinfachter Darstellung;
- Fig. 3: ein Ausführungsbeispiel eines 4-achsigen Fahrzeuges mit drehzahlmäßig unabhängigen Achsen; und
- Fig. 4: ein weiteres Ausführungsbeispiel eines 4-achsigen Fahrzeuges mit drehzahlmäßig unabhängigen Achsen.

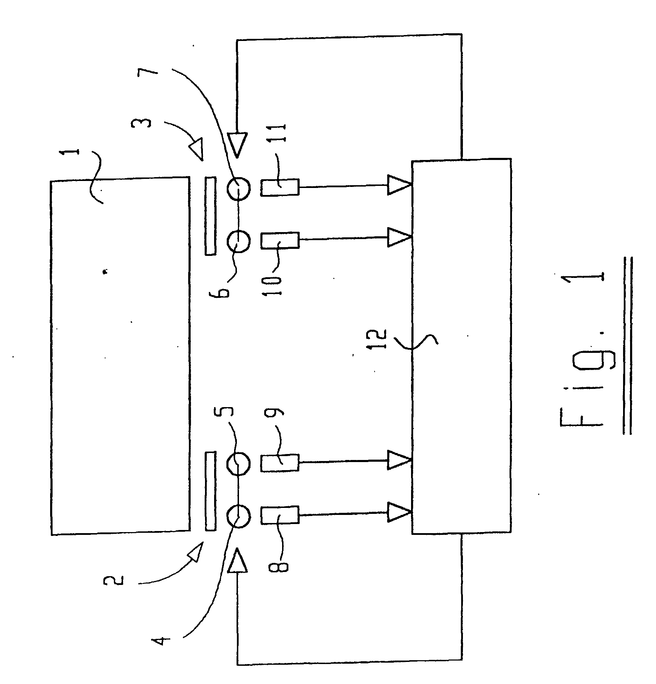

Fig. 1 zeigt ein Schienenfahrzeug 1 mit einem ersten Drehgestell 2 und einem zweiten Drehgestell 3. Dem ersten Drehgestell 2 sind die beiden Radachsen 4, 5 und dem zweiten Drehgestell 3 die beiden Radachsen 6, 7 zugeordnet. Die Radachse 4 ist kinematisch mit der Radachse 5 gekoppelt, was hier nur durch eine schematisch dargestellte Schubstange angedeutet ist. Die Radachsen 4, 5 haben also die gleiche tatsächliche Raddrehzahl. Das gleiche gilt für die Radachsen 6, 7. Die Radachsen 4, 5 sowie die Radachsen 6, 7 bilden also jeweils eine "Radgruppe" mit gleicher tatsächlicher Radgeschwindigkeit.

Die Radgeschwindigkeiten der Radachsen 4-7 werden durch zugeordnete Raddrehzahlsensoren 8-11 sensiert. Die von den Raddrehzahlsensoren 8-11 gelieferten Raddrehzahlsignale werden von einem Steuergerät 12 ausgewertet, welches die Bremsen der Drehgestelle 2 und 3 entsprechend ansteuert.

Bei ordnungsgemäßer Bremsanlage müßten die Raddrehzahlsensoren 8, 9 bzw. 10, 11 jeweils identische Signale liefern. Aufgrund von Sensorstörungen bzw. externen Störeinflüssen, wie z.B. elektromagnetischen Störfeldern, können die Sensorpaare 8, 9 bzw. 10, 11 jedoch voneinander abweichen. In Abhängigkeit vom jeweiligen Fahrzustand, d.h. ob das Fahrzeug gebremst oder ungebremst ist, kann anhand eines Geschwindigkeitskriteriums jeweils ein als gültig anzusehender Sensor aus den Sensorgruppen 8, 9 bzw. 10, 11 ausgewählt werden.

Bei gebremstem Fahrzeug kann beispielsweise die Referenzgeschwindigkeit an demjenigen der Raddrehzahlsensoren 8-11 orientiert werden, welcher die zweithöchste Radgeschwindigkeit anzeigt. Alternativ dazu kann aus jedem der beiden hier vorgesehenen Sensorpaare 8, 9 bzw. 10, 11 derjenige Sensor mit der Minimalgeschwindigkeit ausgewählt werden. Aus den beiden Minimalgeschwindigkeitssensoren kann dann die Maximalgeschwindigkeit zur Ermittlung der Referenzgeschwindigkeit ausgewählt werden (Min-Max-Auswahl).

Bei nichtgebremstem Fahrzeug kann die Referenzgeschwindigkeit auf der Basis der zweitniedrigsten von den Raddrehzahlsensoren 8-11 gemessenen Radgeschwindigkeit ermittelt werden. Alternativ dazu kann zunächst eine Maximalauswahl aus den beiden Drehzahlpaaren getroffen werden. Schließlich kann aus den beiden Maximalgeschwindigkeiten die kleinere zur Ermittlung der Referenzgeschwindigkeit herangezogen werden (Max-Min-Auswahl).

Die Bremsdruckregelung an den Radachsen 4-7 kann entsprechend den oben erläuterten Sicherheits- bzw. Verfügbarkeitskriterien erfolgen.

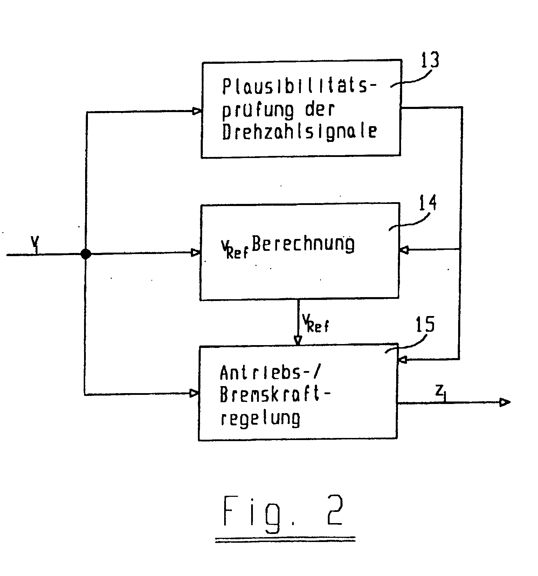

Fig. 2 zeigt vereinfacht die in einem Steuergerät gemäß der Erfindung implementierten Algorithmen. Die gemessenen Raddrehzahlsignale vi werden drei Blöcken zugeführt, nämlich einer Plausibilitätskontrolle 13, einem Algorithmus 14 zur Berechnung der Referenzgeschwindigkeit v_{ref} sowie einem Regelalgorithmus 15 zur Regelung der Antriebs-/Bremskraft zᵢ eines einzelnen Rades oder einer Radgruppe.

Der Plausibilitätsalgorithmus 13 trifft eine "Grobauswahl".

Hierbei wird überprüft, ob einzelne Raddrehzahlsignale vᵢ überhaupt nicht als realistisch in Frage kommen und ausgesondert werden müssen.

Aus den Raddrehzahlsignalen vᵢ wird gemäß den oben erläuterten Fahrzustands- und Geschwindigkeitskriterien eine Referenzgeschwindigkeit v_{ref} gebildet. Die Referenzgeschwindigkeitsberechnung v_{ref} wird dabei stets an einem einzigen Raddrehzahlsignal "orientiert". "Orientieren" bedeutet, daß die Referenzgeschwindigkeit nicht unbedingt gleich dem momentan maßgebenden Raddrehzahlsignal gesetzt wird, sondern daß das Raddrehzahlsignal ggf. gefiltert bzw. geglättet in die Referenzgeschwindigkeit eingeht, um einen "glatten" bzw. möglichst realistischen Geschwindigkeitsverlauf zu erhalten, der möglichst gut der tatsächlichen Fahrzeuggeschwindigkeit angenähert ist.

Der Regelalgorithmus 15 ermittelt unter Berücksichtigung der Raddrehzahlsignale vᵢ und der Referenzgeschwindigkeit die an den einzelnen Rädern bzw. Radgruppen auftretenden Radschlüpfe und regelt in Abhängigkeit davon die Antriebs- bzw. Bremskräfte.

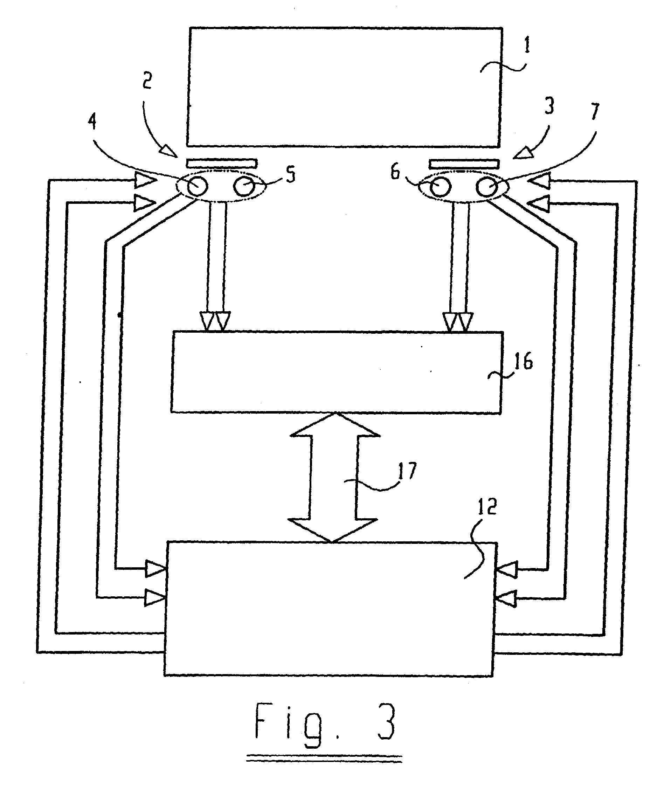

Fig. 3 zeigt ein schematisches Ausführungsbeispiel der Gleitschutz- bzw. Schleuderschutzanlage eines 4-achsigen Fahrzeuges, bei dem im Unterschied zu Fig. 1 die Achsen 4-7 drehzahlmäßig nicht miteinander gekoppelt sind. Die Drehzahlerfassung ist hier auf zwei "Baugruppen" aufgeteilt, nämlich auf das Steuergerät 12 und eine Erweiterungsbaugruppe 16, die über einen Datenbus 17 miteinander in Verbindung stehen. Das heißt, ein Teil der Raddrehzahlsignale wird unmittelbar dem Steuergerät 12 und ein anderer Teil der Raddrehzahlsignale der Erweiterungsbaugruppe 16 zugeführt. Von der Erweiterungsbaugruppe 16 werden die Raddrehzahlsignale zum Steuergerät 12 gesendet. Die oben erläuterten Regelalgorithmen sind jedoch im Steuergerät 12 implementiert.

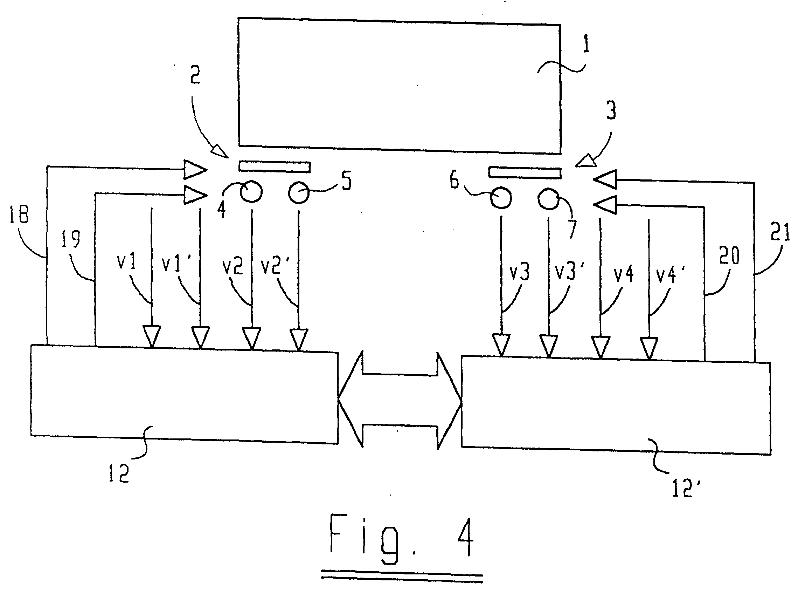

Fig. 4 zeigt ebenfalls ein Ausführungsbeispiel einer Gleitschutz- bzw. Schleuderschutzanlage für ein 4-achsiges Fahrzeug mit unabhängigen Achsen. Im Unterschied zu Fig. 3 sind hier jedoch jedem der beiden Drehgestelle 2 und 3 ein eigenes Steuergerät 12, 12' zur Bremskraftregelung zugeordnet. Im Steuergerät 12 werden hier Raddrehzahlsignale v₁, v_{1'}, v₂, v_{2'} und im Steuergerät 12' Raddrehzahlsignale v₃, v_{3'}, v₄, v_{4'} zugeführt. Die Steuergeräte 12, 12' berechnen hieraus Bremssteuersignale 18-21 für die Achsen 4-7.

## Patentansprüche

1. Fahrzeugbremsanlage mit Radsensoren, die an eine Elektronik angeschlossen sind, zur Bestimmung einer der tatsächlichen Fahrzeuggeschwindigkeit angenäherten Referenzgeschwindigkeit,
**dadurch gekennzeichnet,**
**daß** für jede zu messende Rad- bzw. Radgruppengeschwindigkeit (vᵢ) mindestens zwei Radsensoren (8, 9; 10, 11) vorgesehen sind, und
**daß** unter Auswertung aller vorhandenen Radsensoren (8-11) die Referenzgeschwindigkeit (v_{ref}) momentan stets an einem der vorhandenen Radsensoren (8-11) orientiert wird, wobei der für die Referenzgeschwindigkeitsermittlung momentan maßgebende Radsensor (8-11) in Abhängigkeit des aktuellen Fahrzustandes und mindestens eines vorgegebenen Geschwindigkeitskriteriums ausgewählt wird.

2. Fahrzeugbremsanlage nach Anspruch 1, **dadurch gekennzeichnet,**
**daß** für jede zu messende Radgeschwindigkeit (vᵢ) genau zwei Radsensoren (8, 9; 10, 11) vorgesehen sind.

3. Fahrzeugbremsanlage nach einem der Ansprüche 1 oder 2,
**dadurch gekennzeichnet,**
**daß** bei gebremstem Fahrzeug die Referenzgeschwindigkeit (v_{ref}) an demjenigen Radsensor (8-11) orientiert wird, welcher die zweithöchste Radgeschwindigkeit anzeigt.

4. Fahrzeugbremsanlage nach einem der Ansprüche 1 bis 3,
**dadurch gekennzeichnet,**
**daß** bei ungebremstem Fahrzeug die Referenzgeschwindigkeit (v_{ref}) an demjenigen Radsensor (8-11) orientiert wird, der die zweitniedrigste Radgeschwindigkeit anzeigt.

5. Fahrzeugbremsanlage nach einem der Ansprüche 1 oder 2,
**dadurch gekennzeichnet,**
**daß** in Abhängigkeit des aktuellen Fahzustandes anhand eines ersten Geschwindigkeitskriteriums aus den einander zugeordneten Radsensoren (8, 9; 10, 11) jeweils ein Radsensor (8, 9; 10, 11) ausgewählt wird und aus den ausgewählten Radsensoren (8, 9; 10, 11) anhand eines zweiten Geschwindigkeitskriteriums der für die Referenzgeschwindigkeitsermittlung momentan maßgebende Radsensor (8, 9; 10, 11) ermittelt wird.

6. Fahrzeugbremsanlage nach Anspruch 5, **dadurch gekennzeichnet,**
**daß** das erste und das zweite Geschwindigkeitskriterium jeweils ein Extremwertkriterium sind.

7. Fahrzeugbremsanlage nach einem der Ansprüche 5 oder 6,
**dadurch gekennzeichnet,**
**daß** bei gebremstem Fahrzeug aus den jeweils mindestens zwei Radsensoren (8, 9; 10, 11) derjenige Radsensor (8, 9; 10, 11) mit der minimalen Radgeschwindigkeit ausgewählt wird und die Referenzgeschwindigkeit (v_{ref}) an der maximalen Geschwindigkeit der ausgewählten minimalen Radgeschwindigkeiten orientiert wird.

8. Fahrzeugbremsanlage nach einem der Ansprüche 5 bis 7,
**dadurch gekennzeichnet,**
**daß** bei ungebremstem Fahrzeug aus den jeweils mindestens zwei Radsensoren (8, 9; 10, 11) derjenige Radsensor (8, 9; 10, 11) mit der maximalen Radgeschwindigkeit ausgewählt wird und die Referenzgeschwindigkeit (v_{ref}) an der minimalen Geschwindigkeit der ausgewählten maximalen Radgeschwindigkeiten orientiert wird.

9. Fahrzeugbremsanlage nach einem der Ansprüche 1 bis 8,
**dadurch gekennzeichnet,**
**daß** die Elektronik ein ABS-/ASR-Steuergerät (12, 12') ist.

10. Fahrzeugbremsanlage nach einem der Ansprüche 1 bis 9,
**dadurch gekennzeichnet,**
**daß** bei einem ABS-Regeleingriff der Bremsdruckregelung eines Rades bzw. einer Radgruppe die höhere der von den mindestens zwei zugeordneten Radsensoren gelieferten Geschwindigkeiten zugrunde gelegt wird, wenn eine Absicherung gegen irrtümliches Verringern der Bremskraft höchste Priorität hat.

11. Fahrzeugbremsanlage nach einem der Ansprüche 1 bis 9,
**dadurch gekennzeichnet,**
**daß** bei einem ABS-Regeleingriff der Bremsdruckregelung eines Rades bzw. einer Radgruppe die niedrigere der von den mindestens zwei zugeordneten Radsensoren gelieferten Geschwindigkeiten zugrunde gelegt wird, wenn eine Absicherung gegen Blockieren des Rades bzw. der Radgruppe höchste Priorität hat.

12. Fahrzeugbremsanlage nach einem der Ansprüche 1 bis 11,
**dadurch gekennzeichnet,**
**daß** bei einem ASR-Regeleingriff der Bremsdruckregelung eines Rades bzw. einer Radgruppe die niedrigere der von den mindestens zwei zugeordneten Radsensoren gelieferten Geschwindigkeiten zugrunde gelegt wird, wenn eine Absicherung gegen irrtümlichen Abbau der Traktionskraft an dem Rad bzw. der Radgruppe höchste Priorität hat.

13. Fahrzeugbremsanlage nach einem der Ansprüche 1 bis 11,
**dadurch gekennzeichnet,**
**daß** bei einem ASR-Regeleingriff der Bremsdruckregelung eines Rades bzw. einer Radgruppe die höhere der von den mindestens zwei zugeordneten Radsensoren gelieferten Geschwindigkeiten zugrunde gelegt wird, wenn eine Absicherung gegen Durchdrehen des Rades bzw. der Radgruppe höchste Priorität hat.

14. Fahrzeugbremsanlage nach einem der Ansprüche 1 bis 13,
**dadurch gekennzeichnet,**
**daß** eine Plausibilitätsprüfungseinrichtung (13) vorgesehen ist, welche die von den Raddrehzahlsensoren (8-11) gelieferten Signale (vᵢ) einer Plausibilitätsprüfung unterzieht und Sensoren, welche fehlerhaft erscheinende Signale (vᵢ) liefern, bei der Bestimmung der Referenzgeschwindigkeit (v_{ref}) und der Bremsdruckregelung unberücksichtigt läßt.

## Claims

1. Vehicle braking system with wheel sensors connected to an electronic unit for the determination of a reference speed approximating the actual vehicle speed, **characterised in that**
at least two wheel.sensors (8, 9; 10, 11) are provided for each wheel or wheel set speed (vᵢ) to be measured, and
**in that**, while evaluating all existing wheel sensors (8-11), the reference speed (v_{ref}) is at any one instance oriented to one of the existing wheel sensors (8-11), the wheel sensor (8-11) currently ruling the determination of the reference speed being selected in dependence on the current driving state and on at least one preset speed criterion.

2. Vehicle braking system according to claim 1, **characterised in that**
exactly two wheel sensors (8, 9; 10,11) are provided for each wheel or wheel set speed (vᵢ) to be measured.

3. Vehicle braking system according to claim 1 or 2, **characterised in that**
the reference speed (v_{ref}) is oriented to the wheel sensor (8-11) indicating the second highest wheel speed when the vehicle is braked

4. Vehicle braking system according to any of claims 1 to 3, **characterised in that** the reference speed (v_{ref}) is oriented to the wheel sensor (8-11) indicating the second lowest wheel speed when the vehicle is not braked.

5. Vehicle braking system according to claim 1 or 2, **characterised in that**
one wheel sensor (8, 9; 10, 11) each is selected from the corresponding wheel sensors (8, 9; 10, 11) in dependence on the current driving state with reference to a first speed criterion, and **in that** the wheel sensor (8, 9; 10, 11 ) currently ruling the determination of the reference speed is determined from the selected wheel sensors (8, 9; 10, 11) with reference to a second speed criterion.

6. Vehicle braking system according to claim 5, **characterised in that**
the first and the second speed criteria are extreme value criteria.

7. Vehicle braking system according to claim 5 or 6, **characterised in that**
the wheel sensor (8, 9; 10, 11) with the minimum wheel speed is selected from the at least two wheel sensors (8, 9; 10, 11) when the vehicle is braked, and **in that** the reference speed (v_{ref}) is oriented to the maximum speed of the selected minimum wheel speeds.

8. Vehicle braking system according to any of claims 5 to 7, **characterised in that** the wheel sensor (8, 9; 10, 11) with the maximum wheel speed is selected from the at least two wheel sensors (8, 9; 10, 11) when the vehicle is not braked, and **in that** the reference speed (v_{ref}) is oriented to the minimum speed of the selected maximum wheel speeds.

9. Vehicle braking system according to any of claims 1 to 8, **characterised in that** the electronic unit is an ABS/ASR controller (12, 12').

10. Vehicle braking system according to any of claims 1 to 9, **characterised in that** any ABS operation of the brake pressure control of a wheel or wheel set is based on the higher of the speeds supplied by the at least two corresponding wheel sensors when protection against erroneous reduction of braking force has highest priority.

11. Vehicle braking system according to any of claims 1 to 9, **characterised in that** any ABS operation of the brake pressure control of a wheel or wheel set is based on the lower of the speeds supplied by the at least two corresponding wheel sensors when anti-lock protection of the wheel or wheel set has highest priority.

12. Vehicle braking system according to any of claims 1 to 11, **characterised in that** any ABS operation of the brake pressure control of a wheel or wheel set is based on the lower of the speeds supplied by the at least two corresponding wheel sensors when protection against erroneous reduction of traction force at the wheel or wheel set has highest priority.

13. Vehicle braking system according to any of claims 1 to 11, **characterised in that** any ABS operation of the brake pressure control of a wheel or wheel set is based on the higher of the speeds supplied by the at least two corresponding wheel sensors when protection against spinning of the wheel or wheel set has highest priority.

14. Vehicle braking system according to any of claims 1 to 13, **characterised in that** a plausibility checking device (13) is provided to subject the signals (vᵢ) supplied by the wheel speed sensors (8-11) to a plausibility check and to ignore sensors supplying apparently incorrect signals (vᵢ) when determining reference speed (v_{ref}) and brake pressure control.

## Revendications

1. Installation de freinage de véhicule, comportant des capteurs de roue qui sont raccordés à une électronique et qui servent à déterminer une vitesse de référence approchée de la vitesse de véhicule effective,
**caractérisée en ce que** l'on prévoit au moins deux capteurs de roue (8, 9 ; 10, 11) pour chaque vitesse de rotation de roue ou de groupe de roues (vᵢ) à mesurer et
la vitesse de référence (v_{ref}) est toujours orientée dans l'instant selon un des capteurs de roue (8-11 ) présents en exploitant tous les capteurs de roue (8-11) présents, le capteur de roue (8-11 ) qui est dans l'instant déterminant pour établir la vitesse de référence étant sélectionné en fonction de l'état de conduite présent et d'au moins un critère de vitesse prédéterminé.

2. Installation de freinage de véhicule selon la revendication 1, **caractérisée en ce que** l'on prévoit exactement deux capteurs de roue (8, 9 ; 10, 11) pour chaque vitesse de rotation de roue (vᵢ) à mesurer.

3. Installation de freinage de véhicule selon l'une des revendications 1 ou 2, **caractérisée en ce que**, dans le cas d'un véhicule freiné, la vitesse de référence (v_{ref}) est orientée selon le capteur de roue (8-11 ) qui indique l'avant-dernière vitesse de rotation de roue la plus élevée.

4. Installation de freinage de véhicule selon l'une des revendications 1 à 3, **caractérisée en ce que**, dans le cas d'un véhicule non freiné, la vitesse de référence (v_{ref}) est orientée selon le capteur de roue (8-11 ) qui indique l'avant-dernière vitesse de rotation de roue la plus faible.

5. Installation de freinage de véhicule selon l'une des revendications 1 ou 2, **caractérisée en ce qu'**un capteur de roue (8, 9 ; 10, 11 ) parmi les capteurs de roue (8, 9 ; 10, 11 ) associés l'un à l'autre est à chaque fois sélectionné en fonction de l'état actuel de conduite à l'aide d'un premier critère de vitesse et le capteur de roue (8, 9 ; 10, 11) momentanément déterminant dans l'instant pour établir la vitesse de référence est déterminé à partir des capteurs de roue (8, 9 ; 10, 11) sélectionnés à l'aide d'un deuxième critère de vitesse.

6. Installation de freinage de véhicule selon la revendication 5, **caractérisée en ce que** le premier et le deuxième critères de vitesse sont respectivement un critère de valeur extrême.

7. Installation de freinage de véhicule selon l'une des revendications 5 ou 6, **caractérisée en ce que**, dans le cas d'un véhicule freiné, on sélectionne parmi les capteurs de roue (8, 9 ; 10, 11 ) à chaque fois au moins au nombre de deux le capteur de roue (8, 9 ; 10, 11) dont la vitesse de rotation de roue est la plus petite et la vitesse de référence (v_{ref}) selon la vitesse maximale des vitesses minimales de roue sélectionnées.

8. Installation de freinage de véhicule selon l'une des revendications 5 à 7, **caractérisée en ce que**, dans le cas d'un véhicule non freiné, on sélectionne parmi les capteurs de roue (8, 9 ; 10, 11 ) à chaque fois au moins au nombre de deux le capteur de roue (8, 9 ; 10, 11) dont la vitesse de rotation de roue est la plus élevée et la vitesse de référence (v_{ref}) est orientée selon la vitesse minimale des vitesses de roue maximales sélectionnées.

9. Installation de freinage de véhicule selon l'une des revendications 1 à 8, **caractérisée en ce que** l'électronique est un appareil de commande (12, 12') de dispositif antiblocage ou de système d'antipatinage à l'accélération.

10. Installation de freinage de véhicule selon l'une des revendications 1 à 9, **caractérisée en ce que**, dans le cas d'une intervention sur le réglage du dispositif antiblocage, on prend, pour base du réglage de la pression de freinage d'une roue ou d'un groupe de roues, la plus élevée des vitesses fournies par les capteurs de roue associés au moins au nombre de deux lorsque la sécurité contre une diminution erronée de la force de freinage a la priorité la plus élevée.

11. Installation de freinage de véhicule selon l'une des revendications 1 à 9, **caractérisée en ce que**, dans le cas d'une intervention sur le réglage du dispositif antiblocage, on prend, pour base du réglage de la pression de freinage d'une roue ou d'un groupe de roues, la plus basse des vitesses fournies par les capteurs de roue associés au moins au nombre de deux lorsque la sécurité contre un blocage de la roue ou du groupe de roues a la priorité la plus élevée.

12. Installation de freinage de véhicule selon l'une des revendications 1 à 11, **caractérisée en ce que**, dans le cas d'une intervention sur le réglage du système d'antipatinage à l'accélération, on prend, pour base du réglage de la pression de freinage d'une roue ou d'un groupe de roues, la plus basse des vitesses fournies par les capteurs de roue associés au moins au nombre de deux lorsque la sécurité contre une suppression erronée de la force de traction sur la roue ou le groupe de roues a la priorité la plus élevée.

13. Installation de freinage de véhicule selon l'une des revendications 1 à 11, **caractérisée en ce que**, dans le cas d'une intervention sur le réglage du système d'antipatinage à l'accélération, on prend, pour base du réglage de la pression de freinage d'une roue ou d'un groupe de roues, la plus élevée des vitesses fournies par les capteurs de roue associés au moins au nombre de deux lorsque la sécurité contre un patinage de la roue ou du groupe de roues a la priorité la plus élevée.

14. Installation de freinage de véhicule selon l'une des revendications 1 à 13, **caractérisée en ce que** l'on prévoit une installation de vérification de la vraisemblance (13) qui soumet les signaux (vᵢ) fournis par les capteurs de vitesse de rotation de roue (8-11 ) à une vérification de la vraisemblance et laisse de côté les capteurs qui fournissent des signaux (vᵢ) qui paraissent erronés lorsqu'on détermine la vitesse de référence (v_{ref}) et le réglage de la force de freinage.
